# EUROPÄISCHE PATENTSCHRIFT

(11) **EP 1 513 671 B1**
(45) Veröffentlichungstag und Bekanntmachung des Hinweises auf die Patenterteilung: **16.01.2008**
(21) Anmeldenummer: 03759860.4
(22) Anmeldetag: 16.06.2003
(51) Int. Cl.: B29C 67/00

(54) **PARTIKELN UND VERFAHREN FÜR DIE HERSTELLUNG EINES DREIDIMENSIONALEN GEGENSTANDES**
PARTICLES AND METHODS FOR PRODUCING A THREE-DIMENSIONAL OBJECT
PARTICULES ET PROCEDE DE FABRICATION D'UN OBJET TRIDIMENSIONNEL

(30) Priorität: 18.06.2002 DE 20220325 U; 26.03.2003 DE 20308744 U
(43) Veröffentlichungstag der Anmeldung: 16.03.2005
(73) Patentinhaber: Daimler AG, 70327 Stuttgart (DE)
(72) Erfinder: PFEIFER, Rolf, 71034 Böblingen-Dagersheim (DE); SHEN, Jialin, 89182 Bernstadt (DE)
(86) Internationale Anmeldenummer: PCT/DE2003/002013
(87) Internationale Veröffentlichungsnummer: WO 2003/106148

(56) Entgegenhaltungen:
- EP-A- 0 897 745
- WO-A-02/064354
- US-A- 5 902 441
- US-A1- 2002 016 387

## Beschreibung

Die Erfindung betrifft Partikel für die Herstellung eines dreidimensionalen Gegenstandes mittels schichtaufbauender Verfahren (pulverbasierte generative rapid prototyping Verfahren) sowie ein Verfahren zur Herstellung eines dreidimensionalen Gegenstandes daraus.

Pulverbasierte generative rapid prototyping Verfahren sind beispielsweise unter den Bezeichnungen 3D-Lasersintern oder 3D-Drucken bekannt.

Das sog. 3D-Drucken ist ein Verfahren zur Herstellung eines dreidimensionalen Gegenstandes, bei dem zunächst eine Schicht aus Partikeln auf eine Zielfläche ausgebracht wird und dann ausgewählte Teile der Schicht, entsprechend einem Querschnitt des Gegenstandes, mit einer Flüssigkeit bedruckt werden, in der die Partikeln zumindest teilweise (oberflächlich) löslich sind, derart, dass sich die Partikel in den ausgewählten Teilen miteinander verbinden. Danach werden die Schritte des Auftragens und des Bedruckens für eine Mehrzahl von Schichten wiederholt, so dass sich die verbunden Teile der benachbarten Schichten verbinden, um den Gegenstand zu bilden.

Ein solches 3D-Druckverfahren ist beispielsweise aus den europäischen Patenten EP 0 644 809 B1, EP 0 686 067 B1 bekannt.

3D-Druckverfahren, die eine Verbindung der Partikel durch Anlösen mit der Binderflüssigkeit bewirken, haben den Nachteil, dass der fertige Gegenstand eine deutliche Schrumpfung gegenüber dem ursprünglich mit der Binderflüssigkeit bedruckten Bereich der Partikelschicht aufweist. Der Grund hierfür ist, dass einander berührende angelöste Partikel unter dem Einfluss ihrer Oberflächenspannung enger zusammenrücken, so dass nach dem Trocknen der Binderflüssigkeit eine dichtere Packung als zuvor vorliegt. Dieser Effekt ist nicht ohne weiteres zu unterdrücken, er ist auch in gewissem Umfang notwendig, um einen hinreichend festen Zusammenhalt der Partikel im fertigen Gegenstand zu erzielen. Eine schwerwiegende nachteilige Folge dieses Effekts ist jedoch, dass bei einem mit einem solchen Verfahren hergestellten Gegenstand, der eine bestimmte maximale Größe überschreitet, die Schrumpfung während des Trocknungsprozesses zur Rissbildung führt.

Um dieses Problem zu bekämpfen, sind 3D-Binderdruckverfahren entwickelt worden, bei denen die Binderflüssigkeit Zusätze (Sinterhilfsmittel) enthält, die in den bedruckten Bereichen der Schicht nach Trocknen der Flüssigkeit zurückbleiben und die es ermöglichen, die Partikel in den befeuchteten Bereichen zu verbinden, indem die gesamte bearbeitete Partikelmasse einschließlich der nicht bedruckten Bereiche so erhitzt wird, dass die Partikel in den bedruckten Bereichen unter dem Einfluss des Sinterhilfsmittels sintern, die unbedruckt gebliebenen Partikel jedoch nicht.

Ein Problem dieser Technik ist, dass die verwendeten Sinterhilfsmittel im allgemeinen mineralischer Natur sind und in der Binderflüssigkeit allenfalls dispergierbar, aber nicht löslich sind und daher einen erheblichen Verschleiß der zum Befeuchten des Granulats eingesetzten Spritzdüsen verursachen.

Ein weiteres Problem der bekannten 3D-Binderdruckverfahren ist, dass infolge von Agglomeration der verwendeten Partikel mit ihnen hergestellte Gegenstände dazu neigen, einen ungleichmäßigen, rauhen Oberflächenverlauf aufzuweisen, der dem Verlauf der bedruckten Bereiche nicht exakt entspricht.

Das sog. 3D-Lasersintern verläuft sehr ähnlich zum 3D-Drucken. Lediglich das Bedrucken mit der Binderflüssigkeit wird durch Bestrahlen mit einem Energiestrahl ersetzt, welcher die Partikeln oberflächlich erweicht oder anschmilzt und so ihre Verbindung bewirkt. Ein derartiges Verfahren ist beispielsweise aus der DE 690 31 061 T2 bekannt.

Für das 3D-Lasersintern wurden in der nachveröffentlichten DE 103 13 452 A1 bereits beschichtete Partikeln mit vorteilhaften Eigenschaften vorgeschlagen, deren Beschichtung auch hydrophil sein kann. Derartige Partikeln neigen infolge Wasseraufnahme aus der Luft zur ungewollten Agglomeration, die vermieden werden sollte, um eine möglichst präzise Bauteilherstellung zu gewährleisten.

EP-A-0 897 745 offenbart eine Partikel gemäß dem Oberbegriff des Anspruchs 1.

Aufgabe der Erfindung ist, Partikel für die Herstellung eines dreidimensionalen Gegenstandes mittels schichtaufbauender Verfahren anzugeben, die einen oder mehrere der oben aufgeführten Nachteile vermeiden, sowie Verfahren zur Herstellung eines dreidimensionalen Gegenstandes daraus aufzuzeigen.

Die Aufgabe wird zum einen gelöst durch Partikel mit den Merkmalen des Anspruchs 1.

Auf Kerne aus einem beliebigen Material, z.B. Metall, Keramik oder Kunststoff, beispielsweise Polymethacrylat oder Polyvinylacetal, wird zunächst eine polare Zwischenschicht aufgebracht und darauf dann eine mono-lagige Tensidschicht. Die Tenside ordnen sich auf der polaren Zwischenschicht zwangsläufig derart an, dass ihre polaren Gruppen zur Zwischenschicht zeigen und die unpolaren nach außen. Derartige beschichtete Partikel besitzen eine hydrophobe Oberfläche und nehmen daher kein Wasser aus der Umgebung auf. Daraus resultiert eine gute Rieselfähigkeit und eine deutliche Reduktion der Agglomerationsneigung.

So können aus den erfindungsgemäßen Partikeln Gegenstände mit glatterer Oberfläche als mit einem herkömmlichen Granulat hergestellt werden, oder bei gleicher Partikelgröße wie bei herkömmlichen Partikeln können Gegenstände mit feineren, detailreicheren Strukturen hergestellt werden.

Wenn die Zwischenschicht dicker ist (0,1 bis 10 Prozent des Partikelradius), kommt noch eine zweite, von der Polarität der Oberflächenschicht unabhängige Nutzwirkung hinzu. Aufgrund unterschiedlicher chemisch-physikalischer Eigenschaften der Zwischenschicht und des darunter liegenden Materials ist es nämlich möglich, die zum Herstellen eines festen Gegenstandes aus den Partikeln erforderliche teilweise Verschmelzung der Partikeln auf die Zwischenschicht zu beschränken und so in Abhängigkeit vom Verhältnis der Dicke der Zwischenschicht zum darunter liegenden Material die Schrumpfung zu begrenzen. Dies gilt sowohl für das 3D-Drucken als auch das 3D-Lasersintern.

Hierfür haben sich Dicken der Oberflächenschicht im Bereich von 0,1 bis 10 % des mittleren Partikelradius als geeignet erwiesen.

Als Material für eine solche Zwischenschicht haben sich insbesondere Polyvinylpyrolidone als geeignet erwiesen.

Die Oberflächenschicht des Partikels besteht aus Tensid. Tenside sind allgemein dadurch gekennzeichnet, dass sie polare und unpolare Gruppen in einem Molekül vereinen, so dass sie in der Lage sind, die Lösung von unpolaren Substanzen in polaren Lösungsmitteln oder umgekehrt zu vermitteln, indem jeweils die polare Gruppe sich an der polaren Substanz und die unpolare Gruppe an der unpolaren Substanz anlagert. Hier entspricht die Dicke der Tensidschicht möglichst genau einer Monolage, so dass die polaren Gruppen der Tensidmoleküle möglichst sämtliche zum Innern der Partikel gerichtet sind, die unpolaren aber nach außen, und so die einheitlich unpolare Außenfläche des Partikels bilden.

Bei dem Tensid kann es sich um ein beliebiges aus dem Gebiet der Wasch-, Reinigungs- oder Körperpflegemittel bekanntes Tensid handeln. Geeignet sind anionische (z.B. Fettalkoholsulfate, Alkylbenzolsulfonate), kationische (z.B. Tetraalkylammoniumsalze), nichtionische (z.B. Fettalkoholpolyglycolether oder Alkylpolyglycoside) oder amphotere Tenside. Beispielhaft seinen genannt Natriumlaurylsulfat oder Betain.

Tensid und Zwischenschicht sind zweckmäßigerweise so gewählt, dass ein Lösungsmittel existiert, in welchem das Tensid löslich ist, die Zwischenschicht jedoch nicht. So ist es möglich, zunächst die Zwischenschicht mit bekannten Verfahren (z.B. Sprühtrocknen) auf die Partikeln aufzubringen und dann darüber die Tensidschicht aufzubringen, indem die mit der Zwischenschicht versehenen Partikel mit einer sehr verdünnten Lösung des Tensids in Kontakt gebracht werden und durch Verdampfen des Lösungsmittels getrocknet werden. Die starke Verdünnung der Lösung gewährleistet, dass sich nur eine monomolekulare Tensidschicht auf der Oberfläche der Zwischenschicht ausbildet.

Bei der oben erläuterten Ausgestaltung kann das Partikel einen Kern aus Metall, Keramik oder Polymermaterial aufweisen. Kern- und Beschichtungsmaterialien sollten für eine Verwendung der Partikel in einem 3D-Druckverfahren zweckmäßigerweise so gewählt sein, dass ein Lösungsmittel existiert, welches die Oberflächenschicht und die Zwischenschicht löst, nicht aber den Kern. Ein solches Lösungsmittel kann in dem anschließenden 3D-Druckverfahren als Binderflüssigkeit verwendet werden. Diese Binderflüssigkeit löst zwar die den Kern umgebenden Schichten an und ermöglicht so ein Verschmelzen der Schichten benachbarter Partikel, da sie aber den Kern selbst nicht angreift, ist die durch die Verschmelzung verursachte Schrumpfung auf ein Maß reduziert, das proportional zum Verhältnis des Radius des Kerns zur Dicke der Oberflächenschicht und gegebenenfalls der Zwischenschicht ist.

Entsprechend sollten bei der Verwendung der Partikeln für ein 3D-Lasersinterverfahren Kern- und Beschichtungsmaterialien so gewählt werden, dass die Erweichungstemperatur des Kerns deutlich über jener der darüber liegenden Schichten liegt, so dass auch bei einer derartigen Verbindung das Verschmelzen der Partikeln auf die oberen Schichten beschränkt wird und so die Schrumpfung minimiert wird.

Weitere Merkmale und Vorteile der vorliegenden Erfindung ergeben sich aus der nachfolgenden Beschreibung von Ausführungsbeispielen:

Gemäß einer ersten Ausgestaltung der Erfindung ist ein Partikel als Kugel gestaltet. Es versteht sich jedoch, dass er auch eine von der Kugelform abweichende Gestalt haben kann, etwa ellipsoidisch oder unregelmäßig. Der Partikel hat einen Kern aus einem Polymermaterial, hier aus Polymethylmethacrylat (PMMA), der von einer Zwischenschicht aus Polyvinylpyrolidon umgeben ist. Dieses Material bildet eine polare, hydrophile Außenfläche aus. Geeignete Polyvinylpyrolidone werden unter der Bezeichnungen Luviskol und Luvitec von der Firma BASF vertrieben; geeignet ist auch ein Acrylpolymer der Bezeichnung Bellac von der Belland AG.

Die Zwischenschicht wird erzeugt durch Lösen des Polyvinylpyrolidon in einem basischen wässrigen Medium, Aufbringen der Lösung auf die Partikel und Trocknen der Partikel. Vorzugsweise wird hier als Lösungsmittel eine Lösung von Ammoniak in Wasser verwendet, da diese Lösung gegenüber vielen anderen basischen wässrigen Lösungen den Vorteil hat, rückstandsfrei zu verdampfen. Für die Beschichtung werden die Partikeln in einem Wirbelbett durch einen Heißluftstrom fluidisiert und gleichzeitig mit der Lösung besprüht. Tropfen der Lösung, die auf Partikel stoßen und diese umhüllen, verdunsten in dem Heißluftstrom, wobei das gelöste Polyvinylpyrolidon zurückbleibt und die Zwischenschicht bildet. Die resultierende Schichtdicke ist anhand der Konzentration der verwendeten Lösung/Suspension/Dispersion und der Dauer der Behandlung sowie der Temperatur im Wirbelbett steuerbar.

Die Oberflächenschicht aus dem Tensid Natriumlaurylsulfat wird in analoger Weise wie die Zwischenschicht durch Besprühen der im Wirbelbett fluidisierten Partikel mit einer zweiten Lösung erzeugt, die eine stark verdünnte pH-neutrale wässrige Lösung des Tensids ist. Da Polyvinylpyrolidon in pHneutralen wässrige Lösungen nicht löslich ist, wird die daraus bestehende Zwischenschicht in diesem zweiten Beschichtungsvorgang nicht angegriffen. Bei einer Zwischenschicht aus dem basisch löslichen Bellac darf der pH der zweiten Lösung 9,5 nicht überschreiten. Aufgrund der starken Verdünnung der wässrigen Tensidlösung bildet sich auf der Zwischenschicht nur eine monomolekulare Tensidschicht aus, deren unpolare Gruppen sich einheitlich nach außen richten und so unpolare Partikeln mit geringer Agglomerationsneigung und guter Rieselfähigkeit erzeugen.

Zum Erzeugen eines Gegenstandes aus derartigen Partikeln wird eine Schicht aus Ihnen auf einer Unterlage ausgebracht und von oben mit einer Binderflüssigkeit gemäß einem vorgegebenen Muster besprüht. Zum Besprühen kann ein Gerät ähnlich einem allgemein bekannten Tintenstrahldrucker eingesetzt werden; derartige Geräte sind in den eingangs genannten europäischen Patentschriften beschrieben und werden hier nicht näher erläutert.

Als Binderflüssigkeit sind basische wässrige Lösungen wie etwa Ammoniaklösung geeignet, die auch zum Abscheiden der Zwischenschicht eingesetzt wurden, da sie beide Schichten lösen. Zum Einstellen einer gewünschten Viskosität der Binderflüssigkeit kann z.B. Glykol zugesetzt werden.

Durch Bedrucken von Teilen der Partikelschicht mit der Binderflüssigkeit werden die Oberflächen- und die Zwischenschicht zumindest angelöst, nicht aber der davon eingeschlossene Kern. Die Binderflüssigkeit verdampft und zurück bleiben die miteinander verbundenen Beschichtungen mit den darin eingeschlossenen Kernen, so dass die ehemals separaten Partikeln einen zusammenhängenden Körper bilden. In der nicht von der Binderflüssigkeit getroffenen Umgebung dieses Bereichs bleiben die Partikel unverändert separat.

Durch wiederholtes Aufbringen einer Partikelschicht auf die vorherige Schicht und Bedrucken von Bereichen der neuen Schicht mit Binderflüssigkeit nach einem vorgegebenen Muster, das von Schicht zu Schicht unterschiedlich sein kann, wird schließlich ein zusammenhängender Körper aus verbundenen Partikeln erhalten, der nur noch von den umgebenden, separat gebliebenen Partikeln befreit werden muss.

Da die als Binderflüssigkeit verwendete basische wässrige Ammoniaklösung die PMMA-Kerne der Partikeln nicht löst, bleibt deren ursprüngliche Gestalt im fertigen Gegenstand unverändert erhalten, so dass die Schrumpfung des fertigen Gegenstandes nicht stärker sein kann als das Verhältnis der Dicke der Zwischenschicht zu einem mittleren Radius der Kerne der Partikel. Diese Dicke kann z.B. 0,5 µm bei einem mittleren Radius von ca. 10 µm betragen.

Die unpolare Natur der Außenflächen der Partikel verhindert eine Agglomeration der Partikeln vor dem Lösen ihrer Oberflächen- und Zwischenschicht und gewährleistet so gleichmäßige Zwischenräume zwischen den unverbundenen Partikeln und entsprechend auch eine gleichmäßige Ausbreitung von aufgespritzter Binderflüssigkeit. Die Oberflächen des erhaltenen Gegenstandes sind daher gleichmäßig glatt und folgen genau dem vorgegebenen Muster der Verteilung der Binderflüssigkeit.

In einem Ausführungsbeispiel zum 3D-Lasersintern haben die Partikeln einen Kern aus Polymethylmethacrylat (PMMA), der von einer Zwischenschicht mit niedriger Erweichungstemperatur (< 70° C), hier ein Poly(ethylenglykol)amin oder -amid umgeben ist. Dieses Material bildet eine polare, hydrophile Außenfläche aus. Geeignete Poly(ethylenglykol)amine oder -amide sind in bekannten Datenbanken wie BEILSTEIN oder GMELIN aufgelistet.

Die Zwischenschicht wird erzeugt durch Lösen des Poly-(ethylenglykol)amins in Methanol, Aufbringen der Lösung auf die Partikel und Trocknen der Partikel. Weitere geeignete Lösungsmittel sind tertiäre Butylmethylether oder Essigsäureethylaccetat mit ebenfalls jeweils niedrigen Siedepunkten. Für die Beschichtung werden die Partikeln in einem Wirbelbett durch einen Luftstrom fluidisiert und gleichzeitig mit der Lösung besprüht. Tropfen der Lösung, die auf Partikeln stoßen und diese umhüllen, verdunsten in dem Luftstrom, wobei das gelöste Poly(ethylenglykol)amin zurückbleibt und die Zwischenschicht bildet. Die resultierende Schichtdicke ist anhand der Konzentration der verwendeten Lösung und der Dauer der Behandlung steuerbar.

Die Oberflächenschicht aus dem Tensid Natriumlaurylsulfat wird in analoger Weise wie die Zwischenschicht durch Besprühen der im Wirbelbett fluidisierten Partikel mit einer zweiten Lösung erzeugt, die eine stark verdünnte Lösung des Tensids in einem längerkettigen Alkohol, z.B. Ethanol oder Propanol, ist. Da Poly(ethylenglykol)amin in längerkettigen Alkoholen nicht löslich ist, wird die daraus bestehende Zwischenschicht in diesem zweiten Beschichtungsvorgang nicht angegriffen. Aufgrund der starken Verdünnung der Tensidlösung bildet sich auf der Zwischenschicht nach dem Verdampfen des Lösungsmittels nur eine monomolekulare Tensidschicht aus, deren unpolare Gruppen sich einheitlich nach außen richten und so unpolare Partikeln mit geringer Agglomerationsneigung und guter Rieselfähigkeit erzeugen.

Zum Erzeugen eines Gegenstandes aus derartigen Partikeln wird eine Schicht aus Ihnen auf einer Unterlage ausgebracht und von oben mit einer Laserstrahl gemäß einem vorgegebenen Muster, entsprechend einem Querschnitt des Gegenstandes, bestrahlt, so dass die Partikel in dem ausgewählten Teil verbunden werden. Danach werden die Schritte des Auftragens und des Bedruckens für eine Mehrzahl von Schichten wiederholt, so dass die verbunden Teile der benachbarten Schichten sich verbinden, um den Gegenstand zu bilden. Ein derartiges Verfahren und eine geeignete Vorrichtung sind beispielsweise aus der DE 690 31 061 T2 bekannt und werden hier nicht näher erläutert.

Da die Erweichungstemperatur der PMMA-Kerne der Partikeln mit circa 124° C deutlich höher ist als die des Poly(ethylenglykol)amins mit circa 60°C, bleibt deren ursprüngliche Gestalt bei entsprechender Beschränkung des Laserenergieeintrags im fertigen Gegenstand unverändert erhalten, so dass die Schrumpfung des fertigen Gegenstandes nicht stärker sein kann als das Verhältnis der Dicke der Zwischenschicht zu einem mittleren Radius der Kerne der Partikel. Diese Dicke kann z.B. 0,5 µm bei einem mittleren Radius von ca. 10 µm betragen. Die Erweichungstemperatur der Tensidmonoschicht spielt aufgrund ihrer geringen Dicke und der damit verbundenen minimalen Energieabsorption keine Rolle.

Die unpolare Natur der Außenflächen der Partikel verhindert eine Agglomeration der Partikeln vor dem Erweichen der (Oberflächen- und) Zwischenschicht und gewährleistet so gleichmäßige Zwischenräume zwischen den unverbundenen Partikeln und entsprechend auch einen gleichmäßigen Energieeintrag des Laserstrahls in die Partikelschicht. Die Oberflächen des erhaltenen Gegenstandes sind daher gleichmäßig glatt und folgen genau dem vorgegebenen Muster der Laserbestrahlung.

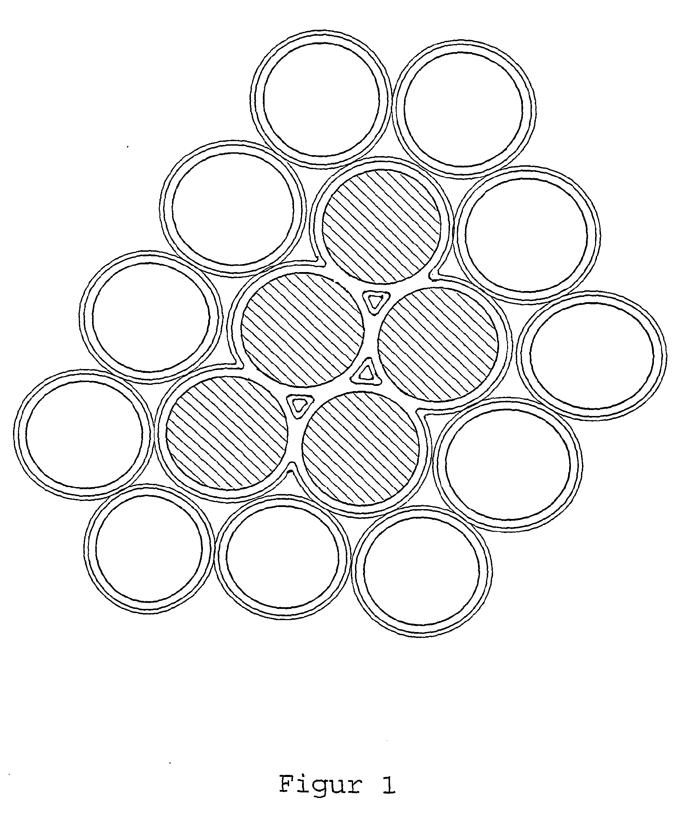

## Patentansprüche

1. Partikel für die Herstellung eines dreidimensionalen Gegenstandes mittels schichtaufbauender Verfahren enthaltend
- einen Kern aus mindestens einem ersten Material
- eine erste Beschichtung des Kerns mit
einem zweiten Material,
das polar ist,
- auf der ersten Beschichtung eine zweite Beschichtung
**dadurch gekennzeichnet,**
**dass** die Dicke der ersten Beschichtung 0,1 bis 10% des mittleren Partikelradius entspricht,
**dass** die zweite Beschichtung aus Tensid ist, deren Dicke einer Monolage des Tensids entspricht.

2. Partikel nach Anspruch 1
**dadurch gekennzeichnet,**
**dass** die erste und zweite Beschichtung in Wasser oder einer wässrigen Lösung löslich sind, nicht aber der Kern.

3. Verfahren zur Herstellung eines dreidimensionalen Gegenstandes aufweisend folgende Schritte:
- Auftragen einer Schicht aus Partikeln auf eine Zielfläche,
- Bestrahlen eines ausgewählten Teils der Schicht, entsprechend einem Querschnitt des Gegenstandes,
mit einem Energiestrahl,
so dass die Partikel in dem ausgewählten Teil verbunden werden,
- Wiederhohlen der Schritte des Auftragens und des Bestrahlens für eine Mehrzahl von Schichten,
so dass die verbunden Teile der benachbarten Schichten sich verbinden, um den Gegenstand zu bilden,
**dadurch gekennzeichnet,**
- **dass** Partikeln nach Anspruch 1 oder 2 verwendet werden.

4. Verfahren zur Herstellung eines dreidimensionalen Gegenstandes aufweisend folgende Schritte:
- Auftragen einer Schicht aus Partikeln auf eine Zielfläche,
- Bedrucken eines ausgewählten Teils der Schicht, entsprechend einem Querschnitt des Gegenstandes,
mit einer Flüssigkeit, in der zumindest Teile der Partikeln löslich sind,
so dass die Partikel in dem ausgewählten Teil verbunden werden,
- Wiederhohlen der Schritte des Auftragens und des Bedruckens für eine Mehrzahl von Schichten, so dass die verbunden Teile der benachbarten Schichten sich verbinden, um den Gegenstand zu bilden,
**dadurch gekennzeichnet,**
- **dass** Partikeln nach Anspruch 1 oder 2 verwendet werden.

## Claims

1. Particle for producing a three-dimensional object by means of layer-building processes, containing
- a core of at least a first material
- a first coating of the core with a second material, which is polar,
- a second coating on the first coating
**characterized**
**in that** the thickness of the first coating corresponds to 0.1 to 10% of the mean particle radius,
**in that** the second coating is formed from surfactant, the thickness of which corresponds to a monolayer of the surfactant.

2. Particle according to Claim 1, **characterized in that** the first coating and the second coating are soluble in water or an aqueous solution but the core is not.

3. Process for producing a three-dimensional object, including the following steps:
- applying a layer of particles to a target surface,
- irradiating a selected part of the layer, corresponding to a cross-section of the object, with an energy beam,
so that the particles are joined in the selected part,
- repeating the application and irradiation steps for a plurality of layers, so that the joined parts of the adjacent layers are joined together in order to form the object,
**characterized**
- **in that** particles according to Claim 1 or 2 are used.

4. Process for producing a three-dimensional object, including the following steps:
- applying a layer of particles to a target surface,
- printing a liquid in which at least parts of the particles are soluble onto a selected part of the layer, corresponding to a cross-section of the object,
so that the particles are joined in the selected part,
- repeating the application and printing steps for a plurality of layers, so that the joined parts of the adjacent layers are joined together in order to form the object,
**characterized**
- **in that** particles according to Claim 1 or 2 are used.

## Revendications

1. Particule pour la fabrication d'un article tridimensionnel à l'aide d'un procédé à construction en couches contenant:
- un noyau d'au moins un premier matériau,
- un premier revêtement du noyau à l'aide d'un deuxième matériau, qui est polaire,
- un deuxième revêtement sur le premier revêtement,
**caractérisée**
**en ce que** l'épaisseur du premier revêtement correspond à de 0,1 à 10% du rayon moyen des particules,
**en ce que** le deuxième revêtement est fait d'un agent tensioactif dont l'épaisseur correspond à une monocouche de l'agent tensioactif.

2. Particule selon la revendication 1, **caractérisée en ce que** le premier revêtement et le deuxième revêtement sont solubles dans l'eau ou dans une solution aqueuse, ce qui n'est cependant pas le cas du noyau.

3. Procédé de fabrication d'un article tridimensionnel présentant les étapes suivantes:
- l'application d'une couche faite de particules sur une surface cible,
- l'irradiation d'une partie sélectionnée de la couche, correspondant à une section transversale de l'article, à l'aide d'un rayonnement énergétique, de telle sorte que les particules soient liées dans la partie sélectionnée,
- la répétition des étapes d'application et d'irradiation pour une pluralité de couches, de telle sorte que les parties liées des couches voisines se lient pour former l'article,
**caractérisé en ce que** les particules selon la revendication 1 ou 2 sont utilisées.

4. Procédé de fabrication d'un article tridimensionnel présentant les étapes suivantes:
- l'application d'une couche faite de particules sur une surface cible,
- l'impression d'une partie sélectionnée de la couche, correspondant à une section transversale de l'article, à l'aide d'un liquide, dans lequel au moins des parties des particules sont solubles, de telle sorte que les particules soient liées dans la partie sélectionnée,
- la répétition des étapes d'application et d'impression pour une pluralité de couches, de telle sorte que les parties liées des couches voisines se lient, pour former l'article,
**caractérisé en ce que** les particules selon la revendication 1 ou 2 sont utilisées.
